# EUROPEAN PATENT APPLICATION

(11) **EP 4 464 726 A1**
(43) Date of publication of application: **20.11.2024**
(21) Application number: 23759609.3
(22) Date of filing: 01.02.2023
(51) Int. Cl.: C08F 290/06, C08F 2/20, C08F 8/12, C08F 216/06, C08F 218/14, C08F 222/00, C09K 23/52

(54) **MODIFIED VINYL ALCOHOL-BASED POLYMER AND METHOD FOR PRODUCING SAME, DISPERSION STABILIZER FOR SUSPENSION POLYMERIZATION, AND METHOD FOR PRODUCING VINYL-BASED RESIN**

(30) Priority: 22.02.2022 JP 2022026087
(71) Applicant: Denka Company Limited, Tokyo 103-8338 (JP)
(72) Inventor: MATSUMOTO, Masanori, Tokyo 103-8338 (JP); WATANABE, Satoshi, Tokyo 103-8338 (JP)
(74) Representative: Gulde & Partner
(86) International application number: PCT/JP2023/003248
(87) International publication number: WO 2023/162603

(57) **Abstract**

There is provided a modified vinyl alcohol-based polymer useful as a dispersion stabilizer suitable for obtaining fine resin particles with a high uniformity of particle size stably under a wide range of stirring conditions during suspension polymerization of vinyl-based compounds such as vinyl chloride. A modified vinyl alcohol-based polymer includes a polyoxyalkylene unit represented by general formula (I) in a side chain, a carbonyl unit represented by general formula (II) in a main chain terminal, and a dicarboxylic acid unit represented by general formula (III) in a main chain. 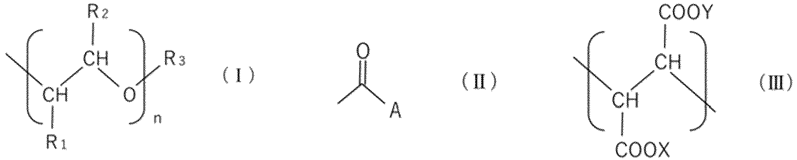 (In general formula (I), R₁ and R₂ each independently represent a hydrogen atom, a methyl group, or an ethyl group, and R₃ represents a hydrogen atom or a methyl group. n represents a number of repeating units and is an integer satisfying 1 ≤ n ≤ 70. In general formula (II), A represents a hydrogen atom or an alkyl group having 1 to 9 carbon atoms. In general formula (III), X and Y each independently represent an alkyl group having 1 to 12 carbon atoms, a hydrogen atom, or a metal atom.)

## Description

### FIELD OF THE INVENTION

The present invention relates to a modified vinyl alcohol-based polymer and a method for producing the same. The present invention also relates to a dispersion stabilizer for suspension polymerization, particularly a dispersion stabilizer suitable for suspension polymerization of a vinyl-based compound, particularly vinyl chloride. The present invention also relates to a method for producing a vinyl-based resin using the dispersion stabilizer for suspension polymerization.

### BACKGROUND OF THE INVENTION

In the case of suspension polymerization of vinyl chloride monomer or a mixture of vinyl chloride monomer and a monomer copolymerizable therewith, it is essential to use various dispersion stabilizers. Dispersion stabilizers such as polyvinyl alcohol and methylol cellulose are used, and among them, polyvinyl alcohol (PVA) has excellent properties and is the most commonly used. For example, a method in which a specific carboxylate group or a carbonyl group derived from an aldehyde is introduced into a polyvinyl alcohol-based polymer as a dispersion stabilizer for suspension polymerization of vinyl-based compounds, and an unsaturated double bond is introduced by undergoing a dehydration reaction or a deacetic acid reaction during saponification, and a method using modified PVA having a specific oxyalkylene group in the side chain, and the like have been proposed (For example, Patent Literatures 1 to 4)..

### PRIOR ART

### Patent Literature

[Patent Literature 1] WO 2006/095462 A1
[Patent Literature 2] WO 2018/038112 A1
[Patent Literature 3] WO 2019/156006 A1
[Patent Literature 4] Japanese Patent Application Publication No. 2020-200460

### SUMMARY OF THE INVENTION

The method of using these modified PVAs as a dispersion stabilizer for suspension polymerization is not adequately applicable to various types of polymerization vessels, such as large polymerization vessels that have been used recently. In other words, for those having strong dispersing power, they have poor protective colloid properties, so under polymerization conditions where the shear caused by the stirring blades is strong, vinyl-based resin particles with non-uniform particle sizes are formed, and for those having strong protective colloid properties, they have poor dispersing power, so under polymerization conditions with little shear caused by the stirring blade, vinyl-based resin particles with non-uniform particle sizes are formed. Since such problems occur, it is insufficient to obtain vinyl-based resin particles that stably satisfy the performance requirements of users.

Accordingly, in one embodiment, one object of the present invention is to provide a modified vinyl alcohol-based polymer useful as a dispersion stabilizer suitable for obtaining fine resin particles with a high uniformity of particle size stably under a wide range of stirring conditions during suspension polymerization of vinyl-based compounds such as vinyl chloride.

As a result of intensive research by the present inventors to solve the above problems, it has been found that it is effective to use a modified vinyl alcohol-based polymer having a certain polyoxyalkylene unit in the side chain, a certain carbonyl unit at the main chain terminal, and a certain dicarboxylic acid unit in the main chain.

In one aspect, the present invention relates to a modified vinyl alcohol-based polymer, comprising a polyoxyalkylene unit represented by general formula (I) in a side chain, a carbonyl unit represented by general formula (II) in a main chain terminal, and a dicarboxylic acid unit represented by general formula (III) in a main chain. 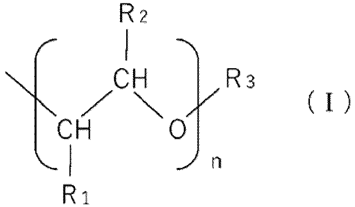 (In which, R₁ and R₂ each independently represent a hydrogen atom, a methyl group, or an ethyl group, and R₃ represents a hydrogen atom or a methyl group. n represents a number of repeating units and is an integer satisfying 1 ≤ n ≤ 70.) 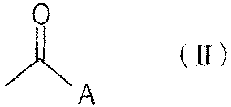 (In which, A represents a hydrogen atom or an alkyl group having 1 to 9 carbon atoms.) 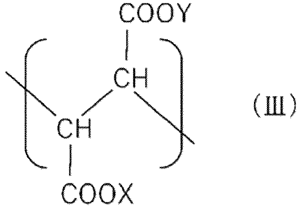 (In which, X and Y each independently represent an alkyl group having 1 to 12 carbon atoms, a hydrogen atom, or a metal atom.)

In one embodiment of the modified vinyl alcohol-based polymer according to the present invention, with respect to a total number of moles of monomer units constituting the main chain, a ratio of a number of moles of monomer units having the polyoxyalkylene unit represented by the general formula (I) in the side chain is 0.01 mol % to 5.0 mol %, a ratio of a number of moles of the carbonyl unit represented by the general formula (II) is 0.01 mol % to 1.0 mol %, and a ratio of a number of moles of the dicarboxylic acid unit represented by the general formula (III) is 0.01 mol % to 0.5 mol %.

In yet another embodiment of the modified vinyl alcohol-based polymer according to the present invention, at least a part of the side chain has a moiety represented by general formula (IV). 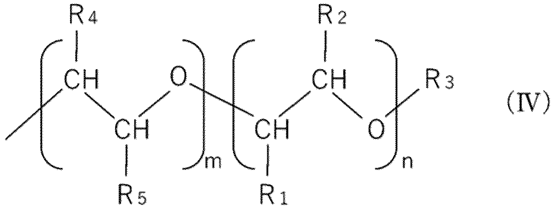 (In which, R₁ and R₂ each independently represent a hydrogen atom, a methyl group, or an ethyl group. R₃ represents a hydrogen atom or a methyl group. One of R₄ and R₅ represents a methyl group or an ethyl group, and the other represents a hydrogen atom. m and n represent numbers of repeating units and are integers satisfying 1 ≤ m ≤ 30 and 1 ≤ n ≤ 70.)

In yet another embodiment of the modified vinyl alcohol-based polymer according to the present invention, it comprises a monomer unit represented by general formula (V): 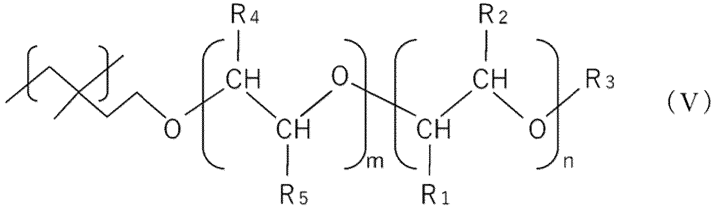 (In which, R₁, R₂, R₃, R₄, R₅, n and m are as defined in the general formula (IV).)

In yet another embodiment of the modified vinyl alcohol-based polymer according to the present invention, a viscosity average degree of polymerization of 100 to 5,000 and a degree of saponification of 65 mol % to 90 mol %.

In another aspect, the present invention relates to a dispersion stabilizer for suspension polymerization, comprising the modified vinyl alcohol-based polymer according to the present invention.

In yet another aspect, the present invention relates to a method for producing a vinyl-based resin, comprising using the dispersion stabilizer for suspension polymerization according to the present invention to disperse a vinyl-based compound monomer or a mixture of a vinyl-based compound monomer and a monomer copolymerizable therewith in water, and carrying out suspension polymerization.

In yet another aspect, the present invention relates to a method for producing the modified vinyl alcohol-based polymer according to the present invention, comprising: obtaining a modified vinyl ester-based polymer by copolymerizing a vinyl ester-based monomer, an unsaturated monomer having a polyoxyalkylene unit represented by the general formula (I), and an unsaturated monomer which derives a dicarboxylic acid unit represented by the general formula (III) in the presence of an aldehyde having a carbonyl unit represented by the general formula (II); and saponifying the obtained modified vinyl ester-based polymer; wherein during the copolymerizing process, the unsaturated monomer which derives a dicarboxylic acid unit represented by the general formula (III) is intermittently or continuously added

In one embodiment of the method for producing a modified vinyl alcohol-based polymer according to the present invention, the unsaturated monomer having a polyoxyalkylene unit represented by the general formula (I) comprises a polyoxyalkylene alkenyl ether represented by the general formula (VI). 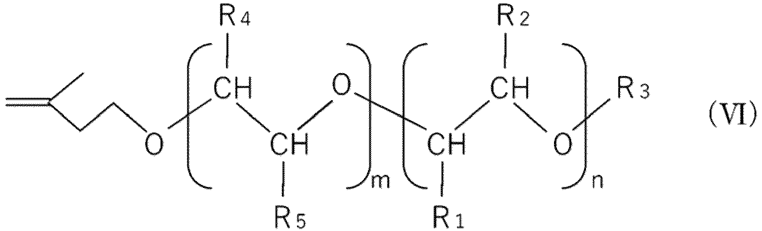 (In which, R₁ and R₂ each independently represent a hydrogen atom, a methyl group, or an ethyl group. R₃ represents a hydrogen atom or a methyl group. One of R₄ and R₅ represents a methyl group or an ethyl group, and the other represents a hydrogen atom. m and n represent numbers of repeating units and are integers satisfying 1 ≤ m ≤ 30 and 1 ≤ n ≤ 70.)

When the dispersion stabilizer for suspension polymerization of the present invention is used to carry out suspension polymerization of a vinyl-based compound, resin particles having a highly uniform particle size can be obtained stably under a wide range of stirring conditions with little formation of coarse particles.

### DETAILED DESCRIPTION OF THE INVENTION

In one embodiment, the modified vinyl alcohol-based polymer of the present invention has a main chain having a polyvinyl alcohol chain and a side chain bonded to the main chain, and the side chain has a polyoxyalkylene unit represented by the general formula (I). 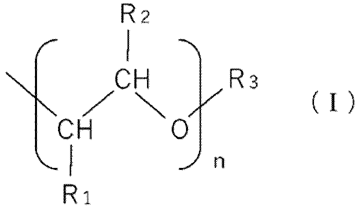 (In which, R₁ and R₂ each independently represent a hydrogen atom, a methyl group, or an ethyl group, and R₃ represents a hydrogen atom or a methyl group. n represents a number of repeating units and is an integer satisfying 1 ≤ n ≤ 70.)

In the general formula (I), the lower limit of n is preferably 10 or more, and more preferably 15 or more. The upper limit of n is preferably 65 or less, and more preferably 60 or less.

At least a portion of the side chains preferably has two or more different oxyalkylene moieties as represented by the general formula (IV). It is more preferable that all of the side chains having the polyoxyalkylene unit represented by the general formula (I) have two or more different oxyalkylene moieties represented by the general formula (IV). As compounds having two or more different oxyalkylene moieties represented by the general formula (IV), specific examples include those in which the repeating units with number m is butylene oxide (one of R₄ or R₅ is an ethyl group, and the other is a hydrogen atom), and the repeating units with number n is ethylene oxide (both R₁ and R₂ are hydrogen atoms), and those in which the repeating units with number m is propylene oxide (one of R₄ or R₅ is a methyl group, and the other is a hydrogen atom), and the repeating units with number n is ethylene oxide (both R₁ and R₂ are hydrogen atoms), and the like. Particularly preferred is those in which the repeating units with number m is butylene oxide (one of R₄ or R₅ is an ethyl group, and the other is a hydrogen atom) and the repeating units with number n is ethylene oxide (both R₁ and R₂ are hydrogen atoms). Here, the moieties having the repeating units with number m and the moieties having the repeating units with number n may be arranged in either a random or block manner, but a block arrangement is preferred from the viewpoint of making it easier to exhibit physical properties based on the alkylene modified groups. 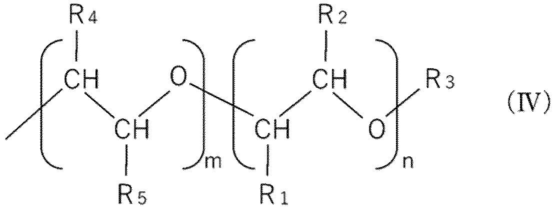 (In which, R₁ and R₂ each independently represent a hydrogen atom, a methyl group, or an ethyl group. R₃ represents a hydrogen atom or a methyl group. One of R₄ and R₅ represents a methyl group or an ethyl group, and the other represents a hydrogen atom. m and n represent numbers of repeating units and are integers satisfying 1 ≤ m ≤ 30 and 1 ≤ n ≤ 70.)

In the general formula (IV), the lower limit of m is preferably 3 or more, more preferably 5 or more. The upper limit of m is preferably 25 or less, more preferably 20 or less. The lower limit of n is preferably 10 or more, more preferably 15 or more. The upper limit of n is preferably 65 or less, more preferably 60 or less.

In the general formula (I), the structure of the connecting moiety between the side chain and the main chain in the modified vinyl alcohol-based polymer is not particularly limited. However, a connecting moiety such as an ester or amide may be cleaved during the process of saponification of the modified vinyl ester-based polymer which will be described below, and therefore it is preferable that the connecting moiety does not have a structure that is easily hydrolyzed. Specifically, it is preferable that the connection be via an ether bond or a carbon-carbon bond.

As the unsaturated monomer which induces the side chain (modified structure) having the polyoxyalkylene unit represented by the general formula (I), examples include polyoxyalkylene alkenyl ether, polyoxyalkylene mono(meth)acrylamide, polyoxyalkylene mono(meth)allyl ether, polyoxyalkylene monovinyl ether, and polyoxyalkylene mono(meth)acrylate. Specifically, examples include polyoxybutylene polyoxyethylene monoacrylamide, polyoxypropylene polyoxyethylene monoacrylamide, polyoxybutylene monoacrylamide, polyoxybutylene polyoxypropylene monoacrylamide, polyoxypropylene monoacrylamide, polyoxypropylene oxyethylene monoacrylamide, polyoxybutylene polyoxyethylene monomethacrylamide, polyoxypropylene polyoxyethylene monomethacrylamide, polyoxybutylene monomethacrylamide, polyoxybutylene polyoxypropylene monomethacrylamide, polyoxypropylene monomethacrylamide, polyoxypropylene oxyethylene monomethacrylamide, polyoxybutylene polyoxyethylene alkenyl ether, polyoxypropylene polyoxyethylene alkenyl ether, polyoxybutylene alkenyl ether, polyoxybutylene polyoxypropylene alkenyl ether, polyoxypropylene alkenyl ether, polyoxypropylene oxyethylene alkenyl ether, polyoxybutylene polyoxyethylene monoallyl ether, polyoxypropylene polyoxyethylene monoallyl ether, polyoxybutylene monoallyl ether allyl ether, polyoxybutylene polyoxypropylene monoallyl ether, polyoxypropylene monoallyl ether, polyoxypropylene oxyethylene monoallyl ether, polyoxybutylene polyoxyethylene monovinyl ether, polyoxypropylene polyoxyethylene monovinyl ether, polyoxybutylene monovinyl ether, polyoxybutylene polyoxypropylene monovinyl ether, polyoxypropylene monovinyl ether, polyoxypropylene oxyethylene monovinyl ether, polyoxybutylene polyoxyethylene monoacrylate, polyoxypropylene polyoxyethylene monoacrylate, polyoxybutylene monoacrylate, polyoxybutylene polyoxypropylene monoacrylate, polyoxypropylene monoacrylate, polyoxypropylene oxyethylene monoacrylate, polyoxybutylene polyoxyethylene monomethacrylate, polyoxypropylene polyoxyethylene monomethacrylate, polyoxybutylene monomethacrylate, polyoxybutylene polyoxypropylene monomethacrylate, polyoxypropylene monomethacrylate, polyoxypropylene oxyethylene monomethacrylate, and the like. Among these, unsaturated monomers having two or more different repeating units as represented by the general formula (IV) are preferred in terms of performance, and furthermore, polyoxyalkylene alkenyl ethers represented by the general formula (VI), and in particular, polyoxybutylene polyoxyethylene alkenyl ethers (one of R₄ or R₅ is an ethyl group and the other is a hydrogen atom, and R₁ and R₂ are both hydrogen atoms) are more preferably used in terms of reactivity and performance. 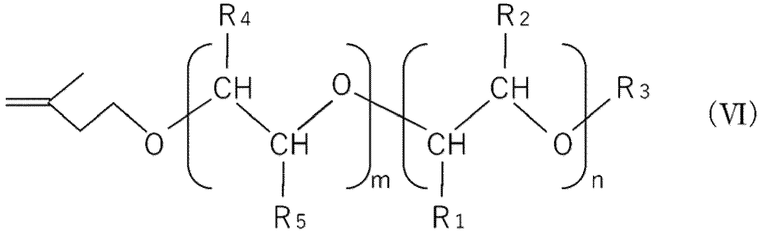 (In which, R₁, R₂, R₃, R₄, R₅, m and n are as defined in the general formula (IV).)

In one embodiment, the modified vinyl alcohol-based polymer of the present invention has a carbonyl unit represented by the general formula (II) at the terminal of the main chain. 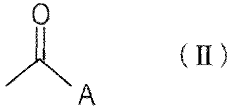 (In which, A represents a hydrogen atom or an alkyl group having 1 to 9 carbon atoms.)

In the general formula (II), A at the carbonyl terminal is an alkyl group having 1 to 9 carbon atoms or a hydrogen atom. There is no particular limitation on the method for deriving a terminal in which A is an alkyl group having 1 to 9 carbon atoms as in the general formula (II). However, a method is simple and efficient in which vinyl ester-based monomers are polymerized in the presence of a corresponding aldehyde at the time of a radical polymerization, and the resulting polymer is dissolved in alcohol and then treated with an alkali such as sodium hydroxide or ammonia, or an acid such as hydrochloric acid or paratoluenesulfonic acid to saponify the vinyl ester-based polymer. If the carbon number of A exceeds 9, the amount of unsaturated double bonds formed due to the carbonyl terminal decreases, resulting in a modified vinyl alcohol-based polymer with poor dispersibility, and the required physical properties are not fully exhibited. Therefore, the number of carbon atoms in A is preferably 9 or less, more preferably 8 or less, even more preferably 6 or less, and even more preferably 5 or less. A may be linear or branched. Preferred specific examples of A include a methyl group, an ethyl group, an n-propyl group, an isopropyl group, an n-butyl group, an isobutyl group, an s-butyl group, a t-butyl group, an n-pentyl group, an isopentyl group, a neopentyl group, a t-pentyl group, a hexyl group, an isohexyl group, a heptyl group, an octyl group., and the like. A methyl group is particularly preferred.

In one embodiment, the modified vinyl alcohol-based polymer of the present invention has a dicarboxylic acid unit represented by general formula (III) in the main chain. 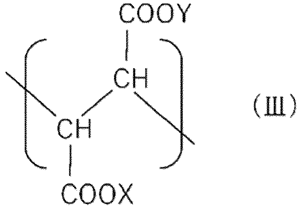 (In which, X and Y each independently represent an alkyl group having 1 to 12 carbon atoms, a hydrogen atom, or a metal atom.)

From the viewpoint of ease of recovery during production, the carbon numbers of X and Y are preferably 12 or less, more preferably 8 or less, even more preferably 4 or less, and even more preferably 2 or less. X may be linear or branched. Preferred specific examples of X and Y include a methyl group, an ethyl group, an n-propyl group, an isopropyl group, an n-butyl group, an isobutyl group, an s-butyl group, a t-butyl group, an n-pentyl group, an isopentyl group, a neopentyl group, a t-pentyl group, a hexyl group, an isohexyl group, a heptyl group, an octyl group, a nonyl group, a decyl group, and the like. A methyl group is particularly preferred in order to obtain resin particles with little formation of coarse particles and with a highly uniform particle size.

The unsaturated monomer which derives a dicarboxylic acid unit represented by the general formula (III) is not particularly limited, and examples include dimethyl maleate, monomethyl maleate, diethyl maleate, monoethyl maleate, dipropyl maleate, monopropyl maleate, dibutyl maleate, monobutyl maleate, dipentyl maleate, monopentyl maleate, dihexyl maleate, monohexyl maleate, dioctyl maleate, monooctyl maleate, dimethyl fumarate, monomethyl fumarate, diethyl fumarate, monoethyl fumarate, dibutyl fumarate, monobutyl fumarate, dipentyl fumarate, monopentyl fumarate, dihexyl fumarate, monohexyl fumarate, diheptyl fumarate, monoheptyl fumarate, dioctyl fumarate, monooctyl fumarate, maleic acid, maleic anhydride, fumaric acid, and the like.

In the modified vinyl alcohol-based polymer of the present invention, with respect to the total number of moles of monomer units constituting the main chain, it is preferable that the ratio of the number of moles of monomer units having the polyoxyalkylene unit represented by the general formula (I) in the side chain is 0.01 mol % to 5.0 mol %.

When the ratio of the number of moles of the monomer units having the polyoxyalkylene unit represented by the general formula (I) in the side chain exceeds 5.0 mol %, the balance between the hydrophilic and hydrophobic groups contained in each molecule of the modified vinyl alcohol-based polymer may not be maintained, resulting in a strong dispersing power but poor protective colloid properties. In such cases, it may be difficult to use the polymer as a dispersion stabilizer for suspension polymerization. Therefore, the upper limit of the ratio of the number of moles of monomer units having the polyoxyalkylene unit in a side chain is preferably 5.0 mol % or less, more preferably 3.0 mol % or less, even more preferably 1.0 mol % or less, and even more preferably 0.5 mol % or less.

When the ratio of the number of moles of the monomer unit having the polyoxyalkylene unit represented by the general formula (I) in the side chain is less than 0.01 mol %, the number of the polyoxyalkylene units, which are modifying groups, contained in the modified vinyl alcohol-based polymer is small, and required physical properties may not be fully exhibited. Therefore, the lower limit of the ratio of the number of moles of monomer units having a polyoxyalkylene unit in the side chain is preferably 0.01 mol % or more, more preferably 0.03 mol % or more, even more preferably 0.05 mol % or more, and even more preferably 0.1 mol % or more.

The ratio of the number of moles of the monomer units having the polyoxyalkylene unit represented by the general formula (I) in the side chain to the total number of moles of the monomer units constituting the main chain of the modified vinyl alcohol-based polymer can be determined by ¹H-NMR. Specifically, a modified vinyl alcohol-based polymer is saponified to a degree of saponification of 99.95 mol % or more, and then thoroughly washed with methanol to prepare a modified vinyl alcohol-based polymer for analysis. The modified vinyl alcohol-based polymer for analysis thus prepared is dissolved in deuterium oxide, and several drops of a deuterium oxide solution are added to adjust the pH to 14, after which the solution is measured at 80 °C using ¹H-NMR.

When calculated from the oxyethylene moieties of the general formula (I) (for example, R₁ = H, R₂ = H), the content is calculated by a conventional method from the integral value of the peak at 1.2 to 1.8 ppm, which is attributable to the methylene groups of the polyvinyl alcohol chain constituting the main chain of the modified vinyl alcohol-based polymer, and the integral value of the peak at 3.6 to 3.7 ppm, which is attributable to the oxyethylene moieties. Specifically, assuming the integral value of the methylene groups of the polyvinyl alcohol chain of the modified vinyl alcohol-based polymer is b, the integral value of the oxyethylene moieties is a, and the number of repeating units of the oxyethylene moieties is x, considering the number of protons (methylene group has 2H, ethylene group has 4H), the ratio of the number of moles is calculated as {a / (4×x)} / (b/2) × 100 (mol %). For example, when a=1, x=1, and b=100, the calculated value is 0.5 mol %.

In addition, when calculated from the oxybutylene or oxypropylene moieties of the general formula (IV), the content is calculated by a conventional method from the integral value of the peak at 1.2 to 1.8 ppm, which is attributable to the methylene groups of the polyvinyl alcohol chain constituting the main chain of the modified vinyl alcohol-based polymer, and the integral value of the peak at 0.80 to 0.95 ppm, which is attributable to the terminal methyl groups of the oxybutylene moieties (R₄ = H, R₅ = CH₂CH₃ (or R₄ = CH₂CH₃, R₅ = H)) or the oxypropylene moieties (R₄ = H, R₅ = CH₃ (or R₄ = CH₃, R₅ = H)). Specifically, assuming the integral value of the methylene groups of the polyvinyl alcohol chain of the modified vinyl alcohol-based polymer is b, the integral value of the oxybutylene moieties or the oxypropylene moieties is c, and the number of repeating units is y, considering the number of protons (methylene group has 2H, methyl group has 3H), the ratio of the number of moles is calculated as {c / (3×y)} / (b/2) × 100 (mol %). For example, when c=1, y=1, and b=100, the calculated value is 0.67 mol %.

In addition, when the modified vinyl alcohol-based polymer has both oxyethylene moieties and oxypropylene moieties (or oxybutylene moieties), the ratio of the number of moles calculated based on the integral value of the peak attributable to the terminal methyl groups of the oxypropylene moieties or the oxybutylene moieties is adopted if there is a difference between the two calculated values. This is because the ratio of the number of moles calculated based on the integral value of the peak attributable to the terminal methyl groups of the oxypropylene moieties or oxybutylene moieties has higher measurement accuracy than the ratio of the number of moles calculated from the oxyethylene moieties.

In the modified vinyl alcohol-based polymer of the present invention, with respect to the total number of moles of monomer units constituting the main chain, it is preferable that the ratio of a number of moles of the carbonyl unit represented by the general formula (II) is 0.01 mol % to 1.0 mol %.

When the ratio of the number of moles of the carbonyl units represented by the general formula (II) exceeds 1.0 mol %, the number of terminals of the polymer may increase, which means that the degree of polymerization may decrease, and the protective colloid properties may decrease, or the polymer may become chemically unstable, so that the viscosity of the aqueous solution may increase or gelation may occur. Therefore, the ratio of the number of moles of carbonyl units is preferably 0.8 mol % or less, more preferably 0.5 mol % or less, even more preferably 0.3 mol % or less, and even more preferably 0.25 mol % or less.

When the ratio of the number of moles of the carbonyl units represented by the general formula (II) is less than 0.01 mol %, the number of initiation points of unsaturated double bonds resulting from the carbonyl terminals decreases and the protective colloid properties decrease, so that as a result, a vinyl-based resin having an appropriate particle size may not be obtained. Therefore, the proportion of the number of moles of carbonyl units is preferably 0.02 mol % or more, more preferably 0.05 mol % or more, and even more preferably 0.1 mol % or more.

The ratio of the number of moles of the carbonyl units represented by the general formula (II) to the total number of moles of the monomer units constituting the main chain of the modified vinyl alcohol-based polymer can be determined by ¹H-NMR. Specifically, a modified vinyl alcohol-based polymer is saponified to a degree of saponification of 99.95 mol % or more, and then thoroughly washed with methanol to prepare a modified vinyl alcohol-based polymer for analysis. The modified vinyl alcohol-based polymer for analysis thus prepared is dissolved in deuterium oxide, and several drops of a heavy water solution of NaOH are added to adjust the pH to 14, after which measurement is performed at 80 °C to obtain a ¹H-NMR spectrum. However, when measuring a formyl terminal where A is a hydrogen atom, saponification is not necessary and the it is analyzed as it is.

It is calculated from the integral value of the peak representing the carbonyl terminal, based on the integral value of the peak representing the methylene group (1.2 to 1.8 ppm) in the main chain of the modified vinyl alcohol-based polymer. When A is a methyl group, the integral value of the peak at 2.15 to 2.25 ppm is used, and when A has 2 or more carbon atoms, the integral value of the peak at 0.95 to 1.10 ppm, which is a terminal methyl group, is used for calculation. The amount of formyl groups is calculated from the integrated value of the peak at 9.2 to 9.8 ppm. Specifically, in the ¹H-NMR spectrum for each terminal measurement, assuming the integral value of the methylene group of the main chain of the modified vinyl alcohol-based polymer is b, and the integral value of the carbonyl terminals is d, considering the number of protons (methylene group is 2, for carbonyl terminals, X=3 because the peak being observed is methyl groups, but for formyl terminals, X=1), the carbonyl terminal modification ratio is calculated as (d/X) / (b/2) × 100 (mol %).

In the modified vinyl alcohol-based polymer of the present invention, with respect to the total number of moles of monomer units constituting the main chain, it is preferable that the ratio of a number of moles of the dicarboxylic acid unit represented by the general formula (III) is 0.01 mol % to 0.5 mol %.

If the molar ratio of the dicarboxylic acid units represented by the general formula (III) exceeds 0.5 mol %, the physical properties change significantly with changes in pH, making the vinyl-based compound chemically unstable during suspension polymerization, and it may become insoluble or gel, resulting in insufficient expression of the required physical properties. Therefore, the upper limit of the proportion of the number of moles of dicarboxylic acid units is preferably 0.5 mol % or less, more preferably 0.4 mol % or less, even more preferably 0.35 mol % or less, and even more preferably 0.3 mol % or less.

When the ratio of the number of moles of the dicarboxylic acid unit represented by the general formula (III) is less than 0.01 mol %, the number of initiation points of unsaturated double bonds resulting from the dicarboxylic acid is reduced and the protective colloid properties are deteriorated, so that as a result, a vinyl-based resin having an appropriate particle size may not be obtained. Therefore, the ratio of the number of moles of dicarboxylic acid units is preferably 0.02 mol % or more, and more preferably 0.03 mol % or more.

The ratio of the number of moles of the dicarboxylic acid units represented by the general formula (III) to the number of moles of all monomer units constituting the main chain of the modified vinyl alcohol-based polymer can be determined by ¹³C-NMR. Specifically, a modified vinyl alcohol-based polymer is saponified to a degree of saponification of 99.95 mol % or more, and then thoroughly washed with methanol to prepare a modified vinyl alcohol-based polymer for analysis. The modified vinyl alcohol-based polymer for analysis thus prepared is dissolved in deuterium oxide, and several drops of a deuterium oxide solution are added to adjust the pH to 14. Then, the solution is measured at 80 °C to obtain a ¹³C-NMR spectrum.

Next, the content is calculated by a conventional method from the integral value of the peak at 25 to 50 ppm which is attributable to the methylene group of the polyvinyl alcohol chain of the modified vinyl alcohol-based polymer and the integral value of the peak at 178 to 185 ppm which is attributable to the dicarboxylic acid group. Specifically, assuming the integral value of the methylene groups of the polyvinyl alcohol chain of the modified vinyl alcohol-based polymer is b, and the integral value of the carbon atoms of the dicarboxylic acid group is a, the content of the dicarboxylic acid units is calculated as (a/2) / (a/2+b) × 100 (mol %). For example, when a = 2 and b = 99, the calculated value is 1.0 mol %.

The lower limit of the viscosity average degree of polymerization of the modified vinyl alcohol-based polymer of the present invention is preferably 100 or more, more preferably 200 or more, and even more preferably 300 or more, in order to enhance the dispersion stability when a vinyl-based compound undergoes suspension polymerization. The upper limit of the viscosity average degree of polymerization of the modified vinyl alcohol-based polymer is preferably 5,000 or less, more preferably 3,000 or less, even more preferably 2,000 or less, and even more preferably 1,500 or less, in order to prevent the aqueous solution from becoming too viscous and difficult to handle.

The viscosity average degree of polymerization of the modified vinyl alcohol-based polymer is measured in accordance with JIS K6726: 1994. That is, the modified vinyl alcohol-based polymer is completely saponified and purified, and then the intrinsic viscosity [η] is measured in water at 30 °C, and the viscosity is determined from this.

The lower limit of the degree of saponification of the modified vinyl alcohol-based polymer of the present invention is preferably 65 mol % or more, more preferably 67 mol % or more, and even more preferably 70 mol % or more, in order to increase the water solubility and make the polymer easy to handle. The upper limit of the saponification degree of the modified vinyl alcohol-based polymer is preferably 90 mol % or less, more preferably 85 mol % or less, and even more preferably 80 mol % or less, in order to increase the porosity of the particles obtained by suspension polymerization of a vinyl-based compound and thereby increase the plasticizer absorption property.

The degree of saponification of the modified vinyl alcohol-based polymer is measured in accordance with JIS K6726: 1994. That is, the amount of remaining acetate groups (mol %) in a sample is determined using sodium hydroxide, and the amount is subtracted from 100 to obtain the degree of saponification.

The method for producing the modified vinyl alcohol-based polymer according to the present invention is not particularly limited, but in one embodiment of the method for producing the modified vinyl alcohol-based polymer according to the present invention, the following production method is easy and economical, and is preferably used, the production method comprising obtaining a modified vinyl ester-based polymer by copolymerizing a vinyl ester-based monomer, an unsaturated monomer having a polyoxyalkylene unit represented by the general formula (I), and an unsaturated monomer which derives a dicarboxylic acid unit represented by the general formula (III) in the presence of an aldehyde having a carbonyl unit represented by general formula (II); and saponifying the obtained modified vinyl ester-based polymer. As the vinyl ester-based monomer, in addition to vinyl acetate, mention can be made to vinyl formate, vinyl propionate, vinyl valerate, vinyl caprate, vinyl laurate, vinyl stearate, vinyl benzoate, vinyl pivalate, vinyl versatate, and the like.

If necessary, it is also possible to copolymerize a monomer copolymerizable with the vinyl ester-based monomer alone or in combination. Examples of such monomer include unsaturated monocarboxylic acids such as acrylic acid, methacrylic acid, crotonic acid, or alkyl esters of these unsaturated monocarboxylic acids; unsaturated dicarboxylic acids such as fumaric acid, itaconic acid, or alkyl esters of these unsaturated dicarboxylic acids; nitriles or amides such as acrylonitrile, methacrylonitrile, acrylamide, methacrylamide; olefin sulfonic acids such as ethylene sulfonic acid, allyl sulfonic acid, methallyl sulfonic acid, or salts thereof; vinyl ethers, vinyl ketones, α-olefins, vinyl halides, vinylidene halides, and the like. The mixing ratio of the copolymerizable monomers is suitably 10 mol % or less in total, preferably 5 mol % or less in total, based on the number of moles of the vinyl ester-based monomer.

The polymerization method employed for producing the modified vinyl ester-based polymer of the present invention may be any of batch polymerization, semi-batch polymerization, continuous polymerization and semi-continuous polymerization. As the polymerization method, any method can be adopted from among known methods such as bulk polymerization, solution polymerization, suspension polymerization, and emulsion polymerization, and the like. Among these, rather than the suspension polymerization method and emulsion polymerization method which require control of the polymer particle size, a solution polymerization method in which polymerization is carried out in the presence of an alcohol-based solvent or a bulk polymerization method in which polymerization is carried out without using a solvent is preferably employed. The alcohol solvent used in the solution polymerization method may be methanol, ethanol, isopropanol, or the like, but is not limited thereto. In addition, these solvents may be used alone or in combination of two or more types.

The polymerization temperature when obtaining the modified vinyl ester-based polymer of the present invention is not particularly limited, but is preferably from 0 °C to 200 °C, more preferably from 30 °C to 150 °C. If the copolymerization temperature is lower than 0 °C, a sufficient polymerization ratio cannot be obtained, which is undesirable. In addition, if the polymerization temperature is higher than 200 °C, the desired modified vinyl alcohol-based polymer is difficult to obtain. As a method for controlling the temperature during copolymerization to 0 °C or higher and 200 °C or lower, there may be mentioned a method for controlling the temperature by an external jacket using a suitable heat medium such as water.

The polymerization initiator used in polymerizing the modified vinyl ester-based polymer of the present invention is not particularly limited. However, azo compounds such as azobisisobutyronitrile, azobis-2,4-dimethylvaleronitrile, azobis(4-methoxy-2,4-dimethylvaleronitrile), azobisdimethylvaleronitrile, and azobismethoxyvaleronitrile; peroxides such as acetyl peroxide, benzoyl peroxide, lauroyl peroxide, acetylcyclohexylsulfonyl peroxide, and 2,4,4-trimethylpentyl-2-peroxyphenoxyacetate; percarbonate compounds such as diisopropyl peroxydicarbonate, di-2-ethylhexyl peroxydicarbonate, and diethoxyethyl peroxydicarbonate; perester compounds such as t-butyl peroxyneodecanoate and α-cumyl peroxyneodecanoate, and the like ma be used alone or in combination of two or more types.

When the polymerization is carried out at a high temperature, discoloration of the polyvinyl alcohol may occur due to decomposition of the vinyl ester-based monomer. In that case, there is no problem in adding an antioxidant such as citric acid to the polymerization system in an amount of about 1 ppm to 100 ppm (based on the mass of the vinyl ester-based monomer) for the purpose of preventing coloration.

In producing the modified vinyl ester-based polymer of the present invention, a vinyl ester-based monomer such as vinyl acetate, an unsaturated monomer having a polyoxyalkylene unit represented by the general formula (I), an unsaturated monomer that induces a dicarboxylic acid unit shown in general formula (III), or other copolymerizable monomers can be charged in their entirety at the beginning of polymerization to copolymerize in the presence of an aldehyde having a carbonyl unit of general formula (II). However, in order to narrow the composition distribution of the resulting modified vinyl ester polymer, it is preferred to intermittently or continuously add an unsaturated monomer which derives the dicarboxylic acid unit represented by the general formula (III) during the copolymerization process. Although it is not intended that the present invention be limited by any theory, it is considering that producing a modified vinyl alcohol-based polymer from a modified vinyl ester-based polymer having a narrow composition distribution and using the resulting polymer as a dispersion stabilizer for suspension polymerization to carry out suspension polymerization of a vinyl-based compound contributes to the miniaturization of resin particles and the reduction of coarse particles. Further, it is more preferable to initially add 1 to 30% by mass, preferably 5 to 20% by mass, of the total amount of the unsaturated monomer from which the dicarboxylic acid monomer represented by the general formula (III) is derived to a reaction vessel, and to add the remaining unsaturated monomer intermittently or continuously from the initial stage of polymerization (a stage at which the polymerization ratio is 0 to 1% relative to the final polymerization ratio). Further, the intermittent or continuous addition of the unsaturated monomer is preferably continued until a polymerization ratio of 60% or more relative to the final polymerization ratio is reached, more preferably until a polymerization ratio of 80% or more relative to the final polymerization ratio is reached, and even more preferably until a polymerization ratio of 90% or more relative to the final polymerization ratio is reached. The polymerization ratio is calculated by measuring out 5.0 g of the polymerization liquid, drying it at 150 °C for 30 minutes, determining the concentration of the polymerization liquid from the mass of the dried product from which the unreacted monomers and solvent have been evaporated, calculating the mass of the polymer polymerized at that point from the concentration of the polymerization liquid, and then calculating the polymerization ratio from the ratio of the polymer to the total amount of monomers charged.

The saponification method for producing the modified vinyl alcohol-based polymer according to the present invention is not particularly limited, and it is preferable to use the modified vinyl ester-based polymer obtained by the above-mentioned method in a usual manner, with alcohols also serving as a solvent. Examples of alcohol includes methanol, ethanol, butanol, and the like. The concentration of the modified vinyl ester polymer in the alcohol can be selected from the range of 20 to 70% by mass. As the alkali catalyst, an alkali catalyst such as an alkali metal hydroxide or alcoholate, for example, sodium hydroxide, potassium hydroxide, sodium methylate, sodium ethylate, or potassium methylate, can be used. As the acid catalyst, an aqueous solution of an inorganic acid such as hydrochloric acid or sulfuric acid, or an organic acid such as p-toluenesulfonic acid can be used. The amount of the catalyst used is preferably 1 to 100 millimole equivalents relative to the vinyl ester-based monomer. The saponification temperature is not particularly limited, but is usually in the range of 10 to 70 °C, preferably in the range of 30 to 50 °C. The reaction is usually carried out for 0.5 to 3 hours.

The drying conditions for producing the modified vinyl alcohol-based polymer according to the present invention are not particularly limited. However, from the viewpoint of introducing double bonds resulting from carbonyl groups or dicarboxylic acid groups, it is preferable to carry out drying while heating at 90 °C or higher for 1 hour or more, more preferably at 100 °C or higher for 1 hour or more, and even more preferably at 120 °C or higher for 2 hours or more. Therefore, the heating conditions in the drying step are preferably, for example, 90 to 180 °C for 1 to 5 hours, and more preferably 100 to 160 °C for 1 to 5 hours.

The dispersion stabilizer for suspension polymerization of the present invention may be the modified vinyl alcohol-based polymer of the present invention alone, or may contain a polyvinyl alcohol-based polymer other than the modified vinyl alcohol-based polymer of the present invention and various other additives, within a range that does not impair the gist of the present invention. The additives include, for example, polymerization regulators such as aldehydes, halogenated hydrocarbons, and mercaptans; polymerization inhibitors such as phenol compounds, sulfur compounds, and N-oxide compounds; pH adjusters; crosslinking agents; preservatives; antifungal agents, antiblocking agents; defoamers, and the like. From the viewpoint of significantly exerting the effects of the present invention, the dispersion stabilizer for suspension polymerization of the present invention preferably contains 10% by mass or more, more preferably 30% by mass or more, and even more preferably 70% by mass or more of the modified vinyl alcohol-based polymer of the present invention

The dispersion stabilizer for suspension polymerization of the present invention can be suitably used in particular for the suspension polymerization of vinyl-based compounds. Therefore, according to another aspect of the present invention, there is provided a method for producing a vinyl-based resin, which comprises dispersing a vinyl-based compound monomer, or a mixture of a vinyl-based compound monomer and a monomer copolymerizable therewith, in water using a dispersion stabilizer for suspension polymerization, and carrying out suspension polymerization.

As the vinyl-based compound, examples include vinyl halides such as vinyl chloride; vinyl esters such as vinyl acetate and vinyl propionate; acrylic acid, methacrylic acid, their esters and salts; maleic acid, fumaric acid, their esters and anhydrides; styrene, acrylonitrile, vinylidene chloride, vinyl ethers, and the like. Among these, the dispersion stabilizer for suspension polymerization according to one embodiment of the present invention is particularly preferably used when vinyl chloride is subjected to suspension polymerization alone or together with a monomer capable of copolymerizing with the vinyl chloride. As monomers that can be copolymerized with vinyl chloride, examples include vinyl esters such as vinyl acetate and vinyl propionate; (meth)acrylic acid esters such as methyl (meth)acrylate and ethyl (meth)acrylate; α-olefins such as ethylene and propylene; unsaturated dicarboxylic acids such as maleic anhydride and itaconic acid; acrylonitrile, styrene, vinylidene chloride, vinyl ether, and the like.

The dispersion stabilizer for suspension polymerization of the present invention can be used alone or in combination with other stabilizers such as cellulose derivatives and surfactants.

By using the dispersion stabilizer for suspension polymerization of the present invention, a vinyl chloride resin having fine particles, a uniform particle size distribution and excellent physical properties can be obtained stably under a wide range of stirring conditions. Polymerization methods for vinyl-based compounds will be specifically described below with reference to examples, but the methods are not limited thereto.

When producing vinyl-based resin particles such as vinyl chloride resin particles, the above-mentioned dispersion stabilizer for suspension polymerization is added in an amount of 0.01% by mass to 0.3% by mass, preferably 0.04% by mass to 0.15% by mass, based on the vinyl-based compound monomer. In addition, the ratio of the vinyl-based compound to water can be, in a mass ratio, vinyl-based compound : water = 1:0.9 to 1:3, and preferably vinyl-based compound : water = 1:1 to 1:1.5.

The polymerization initiator may be any of those conventionally used in the polymerization of vinyl-based compounds, and examples thereof include percarbonate compounds such as diisopropyl peroxydicarbonate, di-2-ethylhexyl peroxydicarbonate, and diethoxyethyl peroxydicarbonate; perester compounds such as t-butyl peroxyneodecanoate and α-cumyl peroxyneodecanoate; peroxides such as acetylcyclohexylsulfonyl peroxide and 2,4,4-trimethylpentyl-2-peroxyphenoxyacetate; azo compounds such as azobis-2,4-dimethylvaleronitrile and azobis(4-methoxy-2,4-dimethylvaleronitrile); as well as potassium persulfate, ammonium persulfate, and hydrogen peroxide, and the like. They can be used alone, or in combination of two or more types.

Furthermore, it is also possible to optionally add a polymerization regulator, a chain transfer agent, a gelling improver, an antistatic agent, a pH adjuster, or the like, which are appropriately used in the polymerization of vinyl-based compounds.

The charging ratio of each component, the polymerization temperature, or the like in carrying out the polymerization of a vinyl-based compound may be determined in accordance with the conditions conventionally used in the suspension polymerization of a vinyl-based compound, and there is no reason for any particular limitation thereto.

### EXAMPLES

The present invention will now be described in more detail with reference to Examples.

### (Example 1)

2000 g of vinyl acetate, 100 g of methanol, 64 g of acetaldehyde, 0.04 g of dimethyl maleate, 0.25 g of azobisisobutyronitrile, and 45 g of a polyoxyalkylene alkenyl ether represented by the general formula (VI), in which m = 5 to 9 and n = 45 to 55 (commercially available product, hereinafter referred to as "monomer A". The moieties with the repeating unit number m and the moieties with the repeating unit number n were arranged in a block fashion.) were charged into a polymerization vessel, and the atmosphere in the system was replaced with nitrogen for 30 minutes, and then heating was started. It was confirmed by NMR that m = 5 to 9 and n= 45 to 55 for the monomer A. When the liquid temperature reached 60 °C, continuous addition of dimethyl maleate and methanol was started and continued until the polymerization ratio reached 80% or more relative to the final polymerization ratio. Specifically, polymerization was carried out while continuously adding 0.36 g of dimethyl maleate and 50 g of methanol at a uniform addition rate over 8 hours. After 9 hours had elapsed since the liquid temperature reached 60 °C, the polymerization was stopped by cooling.

Next, unreacted vinyl acetate was removed by a conventional method, and the resulting polymer was saponified by adding a methanol solution of sodium hydroxide by a conventional method at 40°C for 1 hour, after which it was neutralized and dried at 120 °C for 2 hours to obtain a modified vinyl alcohol-based polymer.

### <Evaluation of properties of modified PVA>

The modification ratio (a) to (c), the degree of saponification, and the viscosity average degree of polymerization of the resulting modified vinyl alcohol-based polymer were measured by the above-mentioned analytical methods. The results are shown in Table 1.
(a) The ratio of the number of moles of monomer units having the polyoxyalkylene unit represented by the general formula (I) in the side chain to the total number of moles of monomer units constituting the main chain of a modified vinyl alcohol-based polymer (hereinafter referred to as the "polyoxyalkylene modification ratio").
(b) The ratio of the number of moles of the carbonyl unit represented by the general formula (II) to the total number of moles of the monomer units constituting the main chain of the modified vinyl alcohol-based polymer (hereinafter referred to as the "carbonyl modification ratio").
(c) The ratio of the number of moles of the dicarboxylic acid unit represented by the general formula (III) to the total number of moles of the monomer units constituting the main chain of the modified vinyl alcohol-based polymer (hereinafter referred to as the "dicarboxylic acid modification ratio").

### <Condition (1): Suspension polymerization of vinyl chloride, high shear stirring>

Into a 30 L stainless steel autoclave equipped with a stirrer, 10 kg of water at 30 °C, 5.6 g of the modified vinyl alcohol-based polymer produced above as a dispersion stabilizer, 4.6 g of t-butyl peroxy neodecanoate as a polymerization initiator, and 1 g of α-cumyl peroxy neodecanoate were charged under stirring. After the autoclave was degassed under vacuum, 7 kg of vinyl chloride monomer was added and polymerization was carried out for 4 hours under conditions of a polymerization temperature of 53 °C and a stirrer rotation speed of 800 rpm. In addition, in this suspension polymerization, the rotation speed of the stirring blade was set to a high speed, and when a dispersant with low protective colloid properties was used, the conditions were such that the particles of the vinyl chloride resin tended to become coarse.

### <Condition (2): Suspension polymerization of vinyl chloride, low shear stirring>

Into a 30 L stainless steel autoclave equipped with a stirrer, 10 kg of water at 30 °C, 5.6 g of the modified vinyl alcohol-based polymer produced above as a dispersion stabilizer, 4.6 g of t-butyl peroxy neodecanoate as a polymerization initiator, and 1 g of α-cumyl peroxy neodecanoate were charged under stirring. After the autoclave was degassed under vacuum, 7 kg of vinyl chloride monomer was added and polymerization was carried out for 4 hours under conditions of a polymerization temperature of 53 °C and a stirrer rotation speed of 500 rpm. In addition, in this suspension polymerization, the rotation speed of the stirring blade was set to a low speed, which was a condition that would easily cause the polyvinyl chloride resin particles to become coarse if a dispersant with low dispersing power was used.

### <Evaluation of vinyl chloride resin>

The average particle size of the obtained vinyl chloride resin and the proportion of particles having a size of 250 µm or more were evaluated by the following method.

The average particle size was measured in accordance with JIS Z8815: 1994 using sieves of 60 mesh (opening 250 µm), 80 mesh (opening 180 µm), 100 mesh (opening 150 µm), 150 mesh (opening 106 µm), and 200 mesh (opening 75 µm). The average particle size, which is the particle size at a cumulative frequency of 50% (by mass) (D50), and the mass ratio of particles of 250 µm or larger were calculated. The results are shown in Table 1.

### (Example 2)

2,000 g of vinyl acetate, 100 g of methanol, 24 g of acetaldehyde, 0.08 g of dimethyl maleate, 0.25 g of azobisisobutyronitrile, and 73 g of the monomer A were charged into a polymerization vessel, and the atmosphere in the system was replaced with nitrogen for 30 minutes, and heating was started. When the liquid temperature reached 60 °C, continuous addition of dimethyl maleate and methanol was started and continued until the polymerization ratio reached 80% or more relative to the final polymerization ratio. Specifically, polymerization was carried out while continuously adding 0.72 g of dimethyl maleate and 50 g of methanol at a uniform addition rate over 8 hours. After 9 hours had elapsed since the liquid temperature reached 60 °C, the polymerization was stopped by cooling. Thereafter, a modified vinyl alcohol-based polymer was produced in the same manner as in Example 1, and the viscosity average degree of polymerization, the degree of saponification, and the modification ratio were measured in the same manner as in Example 1. Moreover, suspension polymerization of vinyl chloride was carried out under the same conditions as in Example 1, except that the obtained modified vinyl alcohol-based polymer here was used, and evaluation was carried out. The results are shown in Table 1.

### (Example 3)

2,000 g of vinyl acetate, 100 g of methanol, 33 g of acetaldehyde, 0.24 g of dimethyl maleate, 0.25 g of azobisisobutyronitrile, and 123 g of the monomer A were charged into a polymerization vessel, and the atmosphere in the system was replaced with nitrogen for 30 minutes, and heating was started. When the liquid temperature reached 60 °C, continuous addition of dimethyl maleate and methanol was started and continued until the polymerization ratio reached 80% or more relative to the final polymerization ratio. Specifically, polymerization was carried out while continuously adding 2.16 g of dimethyl maleate and 50 g of methanol at a uniform addition rate over 8 hours. After 9 hours had elapsed since the liquid temperature reached 60 °C, the polymerization was stopped by cooling. Thereafter, a modified vinyl alcohol-based polymer was prepared in the same manner as in Example 1, and the viscosity average degree of polymerization, the degree of saponification and the modification ratio were measured in the same manner as in Example 1.

### (Example 4)

2,000 g of vinyl acetate, 100 g of methanol, 53 g of acetaldehyde, 0.40 g of dimethyl maleate, 0.25 g of azobisisobutyronitrile, and 138 g of polyoxyalkylene alkenyl ether represented by the general formula (VI), in which m = 5 to 9 and n = 15 to 25 (commercially available product, hereinafter referred to as "monomer B". The moieties with the repeating unit number m and the moieties with the repeating unit number n were arranged in a block-like manner) were charged into a polymerization vessel, and the atmosphere in the system was replaced with nitrogen for 30 minutes, and then heating was started. It was confirmed by NMR that the monomer B had m = 5 to 9 and n = 15 to 25. When the liquid temperature reached 60 °C, continuous addition of dimethyl maleate and methanol was started and continued until the polymerization ratio reached 80% or more relative to the final polymerization ratio. Specifically, polymerization was carried out while continuously adding 3.60 g of dimethyl maleate and 50 g of methanol at a uniform addition rate over 8 hours. After 9 hours had elapsed since the liquid temperature reached 60 °C, the polymerization was stopped by cooling. Thereafter, a modified vinyl alcohol-based polymer was produced in the same manner as in Example 1, and the viscosity average degree of polymerization, the degree of saponification, and the modification ratio were measured in the same manner as in Example 1. In addition, suspension polymerization of vinyl chloride was carried out under the same conditions as in Example 1, except that the obtained modified vinyl alcohol-based polymer here was used, and evaluation was carried out. The results are shown in Table 1.

### (Example 5)

2,000 g of vinyl acetate, 100 g of methanol, 10 g of acetaldehyde, 0.72 g of dimethyl maleate, 0.25 g of azobisisobutyronitrile, and 159 g of the monomer B were charged into a polymerization vessel, and the atmosphere in the system was replaced with nitrogen for 30 minutes, and heating was started. When the liquid temperature reached 60 °C, continuous addition of dimethyl maleate and methanol was started and continued until the polymerization ratio reached 80% or more relative to the final polymerization ratio. Specifically, 6.48 g of dimethyl maleate and 50 g of methanol were continuously added at a uniform addition rate over 8 hours to carry out polymerization. After 9 hours had elapsed since the liquid temperature reached 60 °C, the polymerization was stopped by cooling. Thereafter, a modified vinyl alcohol-based polymer was prepared in the same manner as in Example 1, and the viscosity average degree of polymerization, the degree of saponification and the degree of modification were measured in the same manner as in Example 1. In addition, suspension polymerization of vinyl chloride was carried out under the same conditions as in Example 1, except that the obtained modified vinyl alcohol-based polymer here was used, and evaluation was carried out. The results are shown in Table 1.

### (Example 6)

2,000 g of vinyl acetate, 100 g of methanol, 74 g of acetaldehyde, 0.90 g of dimethyl maleate, 0.25 g of azobisisobutyronitrile, and 240 g of the monomer B were charged into a polymerization vessel, and the atmosphere in the system was replaced with nitrogen for 30 minutes, and heating was started. When the liquid temperature reached 60 °C, continuous addition of dimethyl maleate and methanol was started and continued until the polymerization ratio reached 80% or more relative to the final polymerization ratio. Specifically, polymerization was carried out while continuously adding 8.10 g of dimethyl maleate and 50 g of methanol at a uniform addition rate over 8 hours. After 9 hours had elapsed since the liquid temperature reached 60 °C, the polymerization was stopped by cooling. Thereafter, a modified vinyl alcohol-based polymer was prepared in the same manner as in Example 1, and the viscosity average degree of polymerization, the degree of saponification and the degree of modification were measured in the same manner as in Example 1. In addition, suspension polymerization of vinyl chloride was carried out under the same conditions as in Example 1, except that the obtained modified vinyl alcohol-based polymer here was used, and evaluation was carried out. The results are shown in Table 1.

### (Example 7)

2,000 g of vinyl acetate, 100 g of methanol, 20 g of formaldehyde, 0.40 g of dimethyl maleate, 0.25 g of azobisisobutyronitrile, and 168 g of the monomer A were charged into a polymerization vessel, and the atmosphere in the system was replaced with nitrogen for 30 minutes, and heating was started. When the liquid temperature reached 60 °C, continuous addition of dimethyl maleate and methanol was started and continued until the polymerization ratio reached 80% or more relative to the final polymerization ratio. Specifically, polymerization was carried out while continuously adding 3.60 g of dimethyl maleate and 50 g of methanol at a uniform addition rate over 8 hours. After 9 hours had elapsed since the liquid temperature reached 60 °C, the polymerization was stopped by cooling. Thereafter, a modified vinyl alcohol-based polymer was prepared in the same manner as in Example 1, and the viscosity average degree of polymerization, the degree of saponification and the degree of modification were measured in the same manner as in Example 1. In addition, suspension polymerization of vinyl chloride was carried out under the same conditions as in Example 1, except that the obtained modified vinyl alcohol-based polymer here was used, and evaluation was carried out. The results are shown in Table 1.

### (Example 8)

2,000 g of vinyl acetate, 100 g of methanol, 142 g of normal butyraldehyde, 0.40 g of dimethyl maleate, 0.25 g of azobisisobutyronitrile, and 168 g of the monomer A were charged into a polymerization vessel, and the atmosphere in the system was replaced with nitrogen for 30 minutes, and heating was started. When the liquid temperature reached 60 °C, continuous addition of dimethyl maleate and methanol was started and continued until the polymerization ratio reached 80% or more relative to the final polymerization ratio. Specifically, polymerization was carried out while continuously adding 3.60 g of dimethyl maleate and 50 g of methanol at a uniform addition rate over 8 hours. After 9 hours had elapsed since the liquid temperature reached 60 °C, the polymerization was stopped by cooling. Thereafter, a modified vinyl alcohol-based polymer was prepared in the same manner as in Example 1, and the viscosity average degree of polymerization, the degree of saponification and the degree of modification were measured in the same manner as in Example 1. In addition, suspension polymerization of vinyl chloride was carried out under the same conditions as in Example 1, except that the obtained modified vinyl alcohol-based polymer was used, and evaluation was carried out. The results are shown in Table 1.

### (Example 9)

2,000 g of vinyl acetate, 100 g of methanol, 25 g of acetaldehyde, 0.48 g of diethyl maleate, 0.25 g of azobisisobutyronitrile, and 106 g of the monomer A were charged into a polymerization vessel, and the atmosphere in the system was replaced with nitrogen for 30 minutes, and heating was started. When the liquid temperature reached 60 °C, continuous addition of diethyl maleate and methanol was started and continued until the polymerization ratio reached 80% or more relative to the final polymerization ratio. Specifically, polymerization was carried out while continuously adding 4.32 g of diethyl maleate and 50 g of methanol at a uniform addition rate over 8 hours. After 9 hours had elapsed since the liquid temperature reached 60 °C, the polymerization was stopped by cooling. Thereafter, a modified vinyl alcohol-based polymer was prepared in the same manner as in Example 1, and the viscosity average degree of polymerization, the degree of saponification and the degree of modification were measured in the same manner as in Example 1. In addition, suspension polymerization of vinyl chloride was carried out under the same conditions as in Example 1, except that the obtained modified vinyl alcohol-based polymer here was used, and evaluation was carried out. The results are shown in Table 1.

### (Example 10)

2,000 g of vinyl acetate, 100 g of methanol, 41 g of acetaldehyde, 0.40 g of dimethyl maleate, 0.25 g of azobisisobutyronitrile, and 23 g of polyethylene glycol allyl ether having the polyoxyalkylene unit represented by the general formula (I) with n = 15 to 25 (NOF Corporation: UNIOX (registered trademark) PKA-5005, hereafter referred to as "Monomer C") were charged into a polymerization vessel, and the system was purged with nitrogen for 30 minutes, and heating was started. It was confirmed by NMR that n = 15 to 25 for the monomer C. When the liquid temperature reached 60 °C, continuous addition of dimethyl maleate and methanol was started and continued until the polymerization ratio reached 80% or more relative to the final polymerization ratio. Specifically, polymerization was carried out while continuously adding 3.60 g of dimethyl maleate and 50 g of methanol at a uniform addition rate over 8 hours. After 9 hours had elapsed since the liquid temperature reached 60 °C, the polymerization was stopped by cooling. Thereafter, a modified vinyl alcohol-based polymer was produced in the same manner as in Example 1, and the viscosity average degree of polymerization, the degree of saponification, and the modification rate were measured in the same manner as in Example 1. In addition, suspension polymerization of vinyl chloride was carried out under the same conditions as in Example 1, except that the obtained modified vinyl alcohol-based polymer here was used, and evaluation was carried out. The results are shown in Table 1.

### (Example 11)

2000g of vinyl acetate, 100g of methanol, 41g of acetaldehyde, 0.40g of dimethyl maleate, 0.25g of azobisisobutyronitrile, and 52g of polyethylene glycol polypropylene glycol allyl ether represented by the general formula (IV) with m = 15 to 25 and n = 15 to 25 (NOF Corporation: UNILUBE (registered trademark) PKA-5013, hereafter referred to as "monomer D". The moieties with the repeating unit number m and the moieties with the repeating unit number n were arranged in a random manner.) were charged into a polymerization vessel, and the system was replaced with nitrogen for 30 minutes, and heating was started. It was confirmed by NMR that the monomer D had m = 15 to 25 and n = 15 to 25. When the liquid temperature reached 60 °C, continuous addition of dimethyl maleate and methanol was started and continued until the polymerization ratio reached 80% or more relative to the final polymerization ratio. Specifically, polymerization was carried out while continuously adding 3.60 g of dimethyl maleate and 50 g of methanol at a uniform addition rate over 8 hours. After 9 hours had elapsed since the liquid temperature reached 60 °C, the polymerization was stopped by cooling. Thereafter, a modified vinyl alcohol-based polymer was produced in the same manner as in Example 1, and the viscosity average degree of polymerization, the degree of saponification, and the modification rate were measured in the same manner as in Example 1. In addition, suspension polymerization of vinyl chloride was carried out under the same conditions as in Example 1, except that the obtained modified vinyl alcohol-based polymer here was used, and evaluation was carried out. The results are shown in Table 1.

### (Comparative Example 1)

2000 g of vinyl acetate, 1000 g of methanol, 0.25 g of azobisisobutyronitrile, and 168 g of the monomer A were charged into a polymerization vessel, and the inside of the system was replaced with nitrogen for 30 minutes, and heating was started. After 9 hours had passed since the liquid temperature reached 60 °C, the polymerization was stopped by cooling. Thereafter, a modified vinyl alcohol-based polymer was prepared in the same manner as in Example 1, and the viscosity average degree of polymerization, the degree of saponification and the degree of modification were measured in the same manner as in Example 1. In addition, suspension polymerization of vinyl chloride was carried out under the same conditions as in Example 1, except that the obtained modified vinyl alcohol-based polymer here was used, and evaluation was carried out. The results are shown in Table 2.

### (Comparative Example 2)

2,000 g of vinyl acetate, 100 g of methanol, 28 g of acetaldehyde, 0.25 g of azobisisobutyronitrile, and 168 g of the monomer A were charged into a polymerization vessel, and the atmosphere in the system was replaced with nitrogen for 30 minutes, and then heating was started. After 9 hours had elapsed since the liquid temperature reached 60 °C, the polymerization was stopped by cooling. Thereafter, a modified vinyl alcohol-based polymer was produced in the same manner as in Example 1, and the viscosity average degree of polymerization, the degree of saponification, and the modification rate were measured in the same manner as in Example 1. In addition, suspension polymerization of vinyl chloride was carried out under the same conditions as in Example 1, except that the obtained modified vinyl alcohol-based polymer here was used, and evaluation was carried out. The results are shown in Table 2.

### (Comparative Example 3)

2,000 g of vinyl acetate, 1,000 g of methanol, 1.3 g of dimethyl maleate, 0.25 g of azobisisobutyronitrile, and 168 g of the monomer A were charged into a polymerization vessel, and the atmosphere in the system was replaced with nitrogen for 30 minutes, and then heating was started. When the liquid temperature reached 60 °C, continuous addition of dimethyl maleate and methanol was started and continued until the polymerization ratio reached 80% or more relative to the final polymerization ratio. Specifically, polymerization was carried out while continuously adding 11.7 g of dimethyl maleate and 50 g of methanol at a uniform addition rate over 8 hours. After 9 hours had elapsed since the liquid temperature reached 60 °C, the polymerization was stopped by cooling. Thereafter, a modified vinyl alcohol-based polymer was prepared in the same manner as in Example 1, and the viscosity average degree of polymerization, the degree of saponification and the degree of modification were measured in the same manner as in Example 1. In addition, suspension polymerization of vinyl chloride was carried out under the same conditions as in Example 1, except that the obtained modified vinyl alcohol-based polymer here was used, and evaluation was carried out. The results are shown in Table 2.

### (Comparative Example 4)

2,000 g of vinyl acetate, 100 g of methanol, 74 g of acetaldehyde, and 0.25 g of azobisisobutyronitrile were charged into a polymerization vessel, and the atmosphere in the system was replaced with nitrogen for 30 minutes, after which heating was started. After 9 hours had elapsed since the liquid temperature reached 60 °C, the polymerization was stopped by cooling. Thereafter, a modified vinyl alcohol-based polymer was produced in the same manner as in Example 1, and the viscosity average degree of polymerization, the degree of saponification, and the modification rate were measured in the same manner as in Example 1. In addition, suspension polymerization of vinyl chloride was carried out under the same conditions as in Example 1, except that the obtained modified vinyl alcohol-based polymer was used, and evaluation was carried out. The results are shown in Table 2.

### (Comparative Example 5)

2,000 g of vinyl acetate, 1,000 g of methanol, 0.8 g of dimethyl maleate, and 0.25 g of azobisisobutyronitrile were charged into a polymerization vessel, and the atmosphere in the system was replaced with nitrogen for 30 minutes, after which heating was started. When the liquid temperature reached 60 °C, continuous addition of dimethyl maleate and methanol was started and continued until the polymerization ratio reached 80% or more relative to the final polymerization ratio. Specifically, polymerization was carried out while continuously adding 7.2 g of dimethyl maleate and 50 g of methanol at a uniform addition rate over 8 hours. After 9 hours had elapsed since the liquid temperature reached 60 °C, the polymerization was stopped by cooling. Thereafter, a modified vinyl alcohol-based polymer was produced in the same manner as in Example 1, and the viscosity average degree of polymerization, the degree of saponification, and the modification rate were measured in the same manner as in Example 1. In addition, suspension polymerization of vinyl chloride was carried out under the same conditions as in Example 1, except that the obtained modified vinyl alcohol-based polymer here was used, and evaluation was carried out. The results are shown in Table 2.

### (Comparative Example 6)

2,000 g of vinyl acetate, 100 g of methanol, 24 g of acetaldehyde, 1.2 g of dimethyl maleate, and 0.25 g of azobisisobutyronitrile were charged into a polymerization vessel, and the atmosphere in the system was replaced with nitrogen for 30 minutes, after which heating was started. When the liquid temperature reached 60 °C, continuous addition of dimethyl maleate and methanol was started and continued until the polymerization ratio reached 80% or more relative to the final polymerization ratio. Specifically, polymerization was carried out while continuously adding 10.8 g of dimethyl maleate and 50 g of methanol at a uniform addition rate over 8 hours. After 9 hours had elapsed since the liquid temperature reached 60 °C, the polymerization was stopped by cooling. Thereafter, a modified vinyl alcohol-based polymer was prepared in the same manner as in Example 1, and the viscosity average degree of polymerization, the degree of saponification and the degree of modification were measured in the same manner as in Example 1. In addition, suspension polymerization of vinyl chloride was carried out under the same conditions as in Example 1, except that the obtained modified vinyl alcohol-based polymer here was used, and evaluation was carried out. The results are shown in Table 2.

### (Comparative Example 7)

2000g of vinyl acetate, 100g of methanol, 36g of acetaldehyde, 0.9g of dimethyl maleate, 0.25g of azobisisobutyronitrile, and 48g of polypropylene glycol monomethacrylate (NOF Corporation: Blemmer (registered trademark) PP800, hereafter referred to as "Monomer E") were charged into a polymerization vessel, and the system was replaced with nitrogen for 30 minutes, after which the temperature was raised. When the liquid temperature reached 60 °C, continuous addition of dimethyl maleate and methanol was started and continued until the polymerization ratio reached 80% or more relative to the final polymerization ratio. Specifically, polymerization was carried out while continuously adding 8.1 g of dimethyl maleate and 50 g of methanol at a uniform addition rate over 8 hours. After 9 hours had elapsed since the liquid temperature reached 60 °C, the polymerization was stopped by cooling. Thereafter, a modified vinyl alcohol-based polymer was prepared in the same manner as in Example 1, and the viscosity average degree of polymerization, the degree of saponification and the degree of modification were measured in the same manner as in Example 1. The ¹H-NMR of the resulting modified vinyl alcohol-based polymer was measured, but the peaks derived from the modified species observed in the polyvinyl acetate were not observed in the polyvinyl alcohol. This is because the polyoxyalkylene unit was bonded to the side chain via an ester bond, and the polyoxyalkylene unit was eliminated by the saponification reaction. In addition, suspension polymerization of vinyl chloride was carried out under the same conditions as in Example 1, except that the obtained modified vinyl alcohol-based polymer was used, and evaluation was carried out. The results are shown in Table 2.

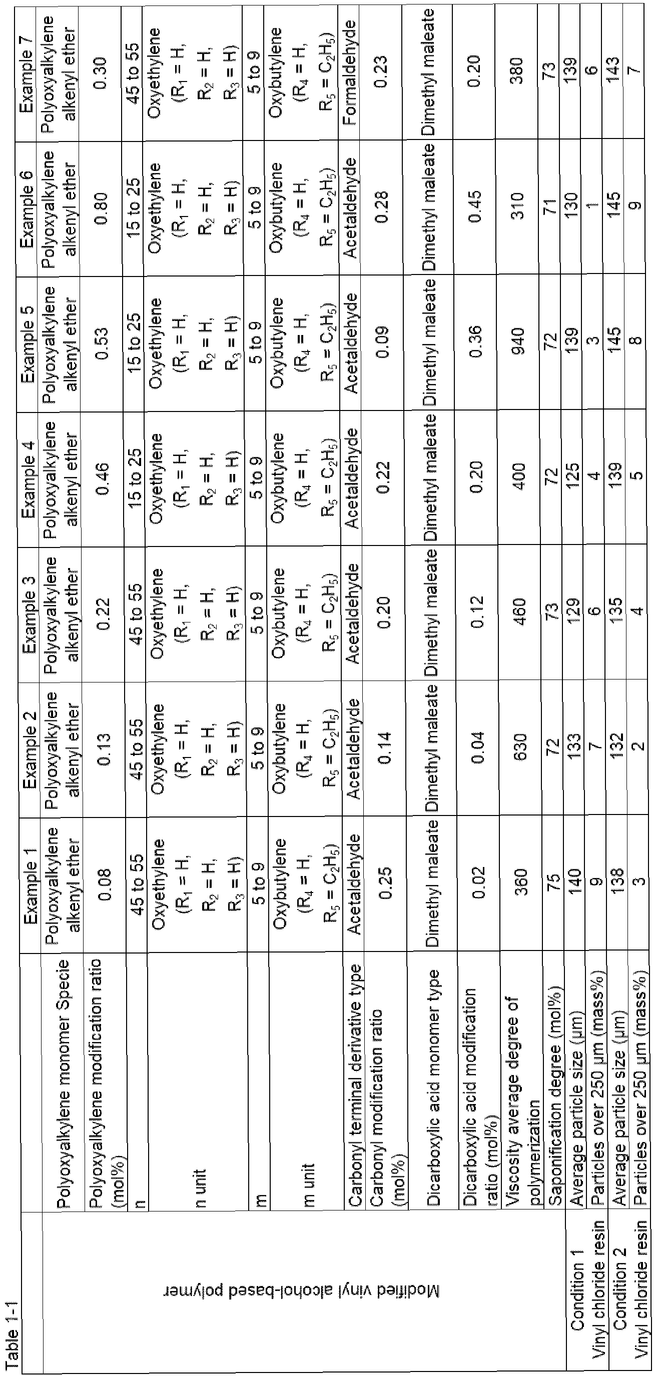

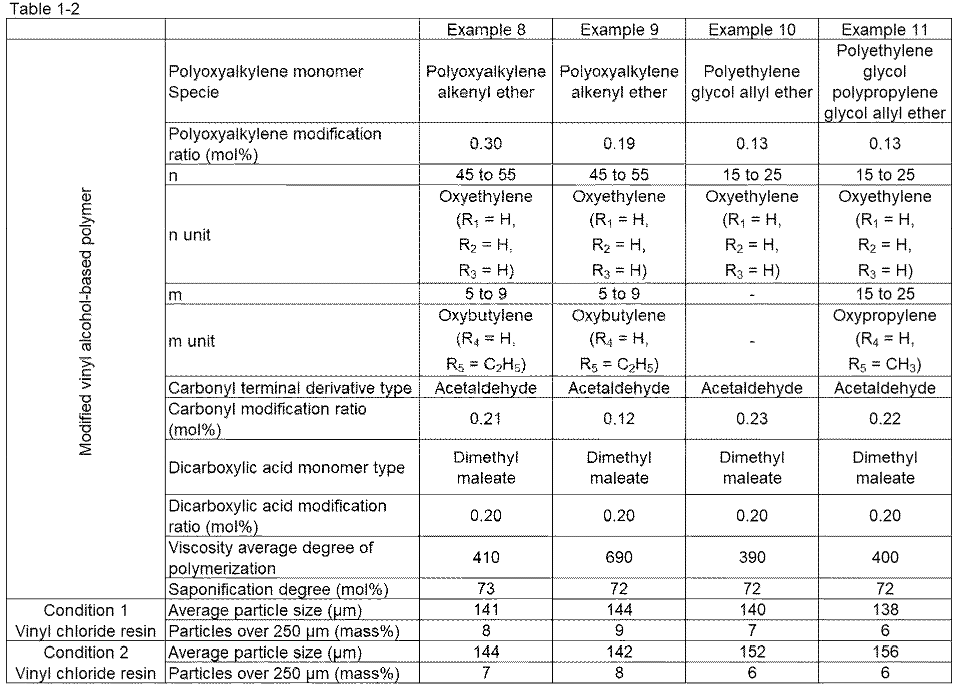

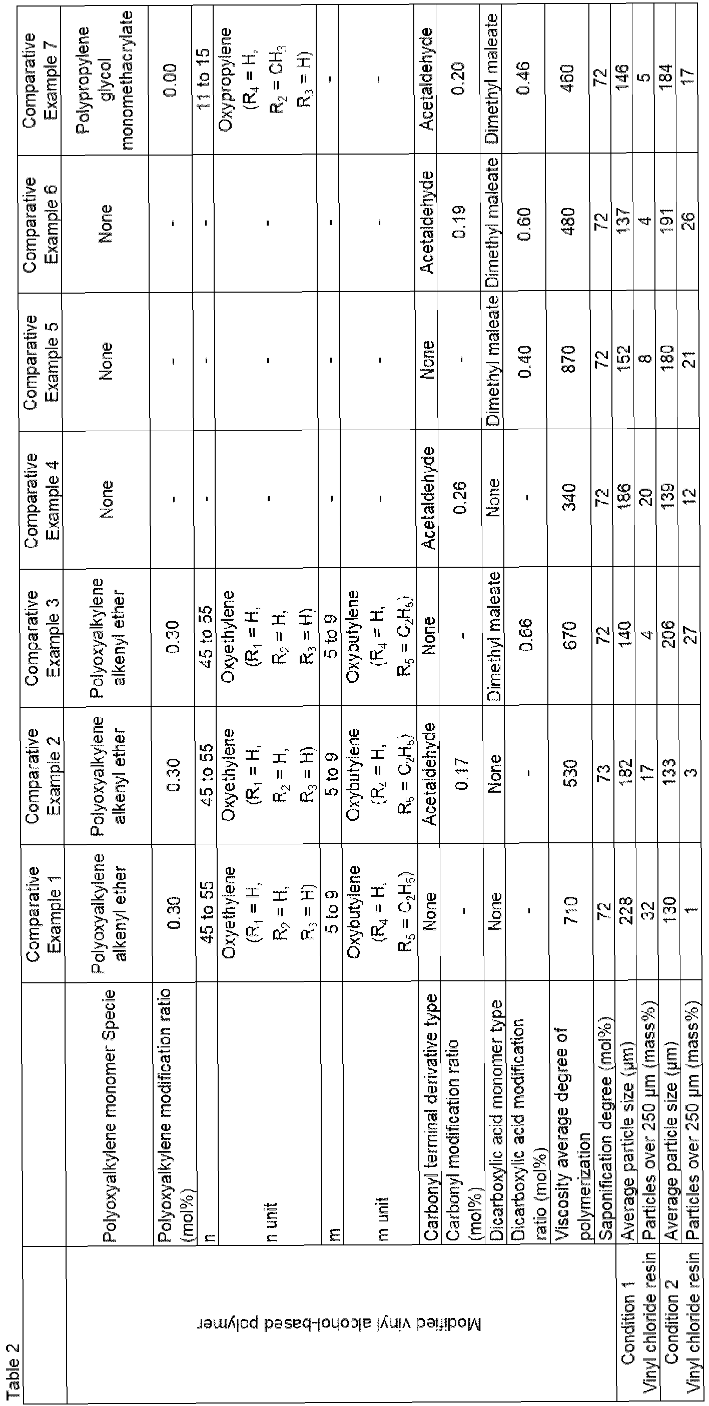

When the modified vinyl alcohol-based polymers shown in Comparative Examples 1 to 7 were used as dispersion stabilizers, the vinyl chloride resin particles sometimes became enlarged and the amount of coarse particles increased depending on the stirring speed of the vinyl chloride, narrowing the range of application as a dispersion stabilizer. In contrast, when the modified vinyl alcohol-based polymers shown in Examples 1 to 11 were used as dispersion stabilizers, the particle size of the vinyl chloride resin was highly uniform and little coarse particles were formed, even when the stirring speed during vinyl chloride polymerization was changed. Therefore, the modified vinyl alcohol-based polymers of Examples 1 to 11 are highly versatile and extremely advantageous industrially.

## Claims

1. A modified vinyl alcohol-based polymer, comprising a polyoxyalkylene unit represented by general formula (I) in a side chain, a carbonyl unit represented by general formula (II) in a main chain terminal, and a dicarboxylic acid unit represented by general formula (III) in a main chain. 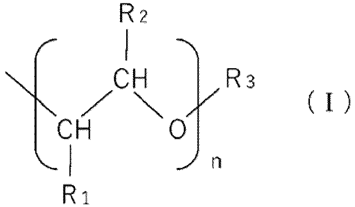 (In which, R₁ and R₂ each independently represent a hydrogen atom, a methyl group, or an ethyl group, and R₃ represents a hydrogen atom or a methyl group. n represents a number of repeating units and is an integer satisfying 1 ≤ n ≤ 70.) 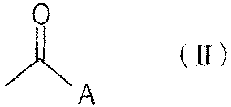 (In which, A represents a hydrogen atom or an alkyl group having 1 to 9 carbon atoms.) 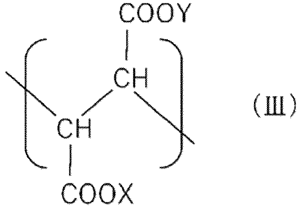 (In which, X and Y each independently represent an alkyl group having 1 to 12 carbon atoms, a hydrogen atom, or a metal atom.)

2. The modified vinyl alcohol-based polymer according to claim 1, wherein with respect to a total number of moles of monomer units constituting the main chain, a ratio of a number of moles of monomer units having the polyoxyalkylene unit represented by the general formula (I) in the side chain is 0.01 mol % to 5.0 mol %, a ratio of a number of moles of the carbonyl unit represented by the general formula (II) is 0.01 mol % to 1.0 mol %, and a ratio of a number of moles of the dicarboxylic acid unit represented by the general formula (III) is 0.01 mol % to 0.5 mol %.

3. The modified vinyl alcohol-based polymer according to claim 1 or 2, wherein at least a part of the side chain has a moiety represented by general formula (IV). 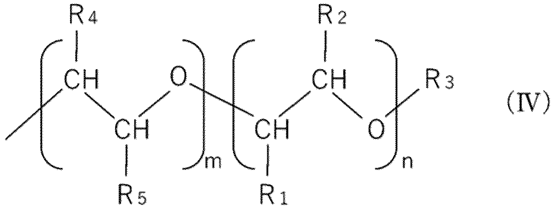 (In which, R₁ and R₂ each independently represent a hydrogen atom, a methyl group, or an ethyl group. R₃ represents a hydrogen atom or a methyl group. One of R₄ and R₅ represents a methyl group or an ethyl group, and the other represents a hydrogen atom. m and n represent numbers of repeating units and are integers satisfying 1 ≤ m ≤ 30 and 1 ≤ n ≤ 70.)

4. The modified vinyl alcohol-based polymer according to claim 3, comprising a monomer unit represented by general formula (V): 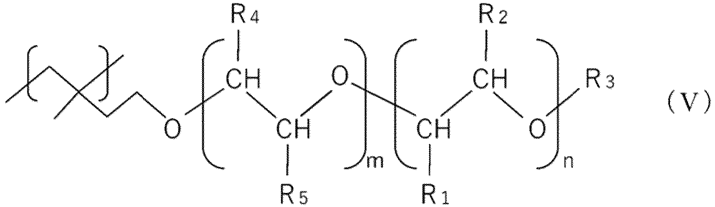 (In which, R₁, R₂, R₃, R₄, R₅, n and m are as defined in the general formula (IV).)

5. The modified vinyl alcohol-based polymer according to any one of claims 1 to 4, wherein a viscosity average degree of polymerization of 100 to 5,000 and a degree of saponification of 65 mol % to 90 mol %.

6. A dispersion stabilizer for suspension polymerization, comprising the modified vinyl alcohol-based polymer according to any one of claims 1 to 5.

7. A method for producing a vinyl-based resin, comprising using the dispersion stabilizer for suspension polymerization according to claim 6 to disperse a vinyl-based compound monomer or a mixture of a vinyl-based compound monomer and a monomer copolymerizable therewith in water, and carrying out suspension polymerization.

8. A method for producing the modified vinyl alcohol-based polymer according to any one of claims 1 to 5, comprising:
obtaining a modified vinyl ester-based polymer by copolymerizing a vinyl ester-based monomer, an unsaturated monomer having a polyoxyalkylene unit represented by the general formula (I), and an unsaturated monomer which derives a dicarboxylic acid unit represented by the general formula (III) in the presence of an aldehyde having a carbonyl unit represented by the general formula (II); and
saponifying the obtained modified vinyl ester-based polymer;
wherein during the copolymerizing process, the unsaturated monomer which derives a dicarboxylic acid unit represented by the general formula (III) is intermittently or continuously added.

9. The method according to claim 8, wherein the unsaturated monomer having a polyoxyalkylene unit represented by the general formula (I) comprises a polyoxyalkylene alkenyl ether represented by the general formula (VI). 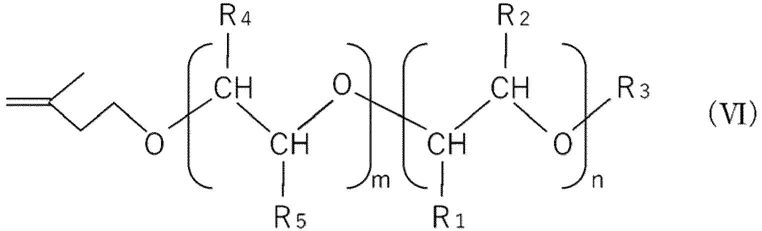 (In which, R₁ and R₂ each independently represent a hydrogen atom, a methyl group, or an ethyl group. R₃ represents a hydrogen atom or a methyl group. One of R₄ and R₅ represents a methyl group or an ethyl group, and the other represents a hydrogen atom. m and n represent numbers of repeating units and are integers satisfying 1 ≤ m ≤ 30 and 1 ≤ n ≤ 70.)
